# EUROPEAN PATENT APPLICATION

(11) **EP 1 150 098 A1**
(43) Date of publication of application: **31.10.2001**
(21) Application number: 00201460.3
(22) Date of filing: 25.04.2000
(51) Int. Cl.: G01C 21/26

(54) **Navigation system with an interface to an electronic logbook**

(71) Applicant: Mannesmann VDO Aktiengesellschaft, 60388 Frankfurt am Main (DE)
(72) Inventor: Völkel, Andreas, 35576 Braunfels (DE)
(74) Representative: Klein, Thomas, Dipl.-Ing.

(57) **Abstract**

A navigation system is provided with various interlinked facilities, including a user I/O facility, a route planning facility and a position determining facility. In particular, the navigation system is arranged to physically interface to a data communication facility pertaining to a log book device.

## Description

The invention relates to a vehicle navigation system provided with various interlinked facilities, including a user I/O facility, a route planning facility and a position determining facility. Car navigation systems have become widespread. The invention also relates to a method for operating such system. Such vehicle navigation system is generally to facilitate the planning of a user's itinerary on various levels, such as through geographically selecting an optimum route, through the setting of temporal specifications with respect to various destination locations or categorized activities, to the heuristic solving of the "Travelling Salesman" problem, and other. Various other functional devices, which have been coming into use could amplify the functionalities of the navigation system to an enormous degree. A particular device is a trip log book that may be embodied as a portable device. Particularly advantageous functions thereof include the following:
- Automatic logging and storing of the data of past routes, such as starting and arrival times, travelled distances, durations, locations and purposes of intermediate stops;
- Loading of the above data or special-purpose selections thereof into a notebook, **P**ersonal **T**ravel **A**ssistant **PTA** or palmtop;
- Effecting automatic bookkeeping, post-calculating, billing, etcetera, viz a viz the above, in view of certain customers, departments, drivers, or products;
- Using logged data pertaining to earlier trips for usage in the planning of later journeys, such as by including nonuniformities between various drivers, types of cargo, and destinations, or combinations thereof.

The physical combination of a navigation system with such log book device will provide for a more efficient coupling and retrocoupling between the various components of the hybridized organization, and therefore raise productivity, as well as allow new and improved results over those of the prior art.

It is an object of the present invention to physically integrate the functionality of a vehicle navigation system and various functionalities pertaining to the field of office automation, and in particular, the functional features of a log book device.

Therefore, a vehicle navigation system provided with various interlinked facilities, including a user I/O facility, a route planning facility and a position determining facility according to the invention is characterized in that the navigation system is arranged to physically interface to a data communication facility pertaining to a trip log book device.

A preferable extension in functionalties of such vehicle navigation system according to the invention is characterized in that said navigation system is arranged for signalling actual route data to said log book device for consideration in a preexisting logging or financial context.

Another preferable extension in functionalties of the above vehicle navigation system according to the invention is characterized in that said log book device is arranged for signalling actual logging or financially oriented data to said navigation system for consideration in a preexistent or future route scheme context.

A method for operating a vehicle navigation system provided with various interlinked facilities, including a user I/O facility, a route planning facility and a position determining facility according to the invention is characterized by physically interfacing the navigation system to a data communication facility pertaining to a log book device.

These and further aspects and advantages of the invention will be discussed more in detail hereinafter with reference to the disclosure of preferred embodiments, and in particular with reference to the appended figures that show in:
Figure 1 an overall diagram of a vehicle navigation system according to the invention;
Figure 2 an integrated combination of a navigation system and a log book device;
Figure 3 the same combination connected through a wired interface;
Figure 4 ditto for a broadcast or infrared link;
Figures 5a, 5b two configurations through combining aspects of the earlier embodiments;
Figure 6 a block diagram of an interacting combination of navigation system and log book device.

The principle of the invention is to combine the functionalities of a vehicle navigation system on the one hand, and of a log book device on the other hand. The latter device may be part of the navigation system itself, or will be able to communicate on an interface that connects the navigation system with the log book device. For example, the log book device is provided to collect data of the actual route being taken, and further to load data provided by the log book device level into the navigation system for subsequent use by the navigation functionalities.

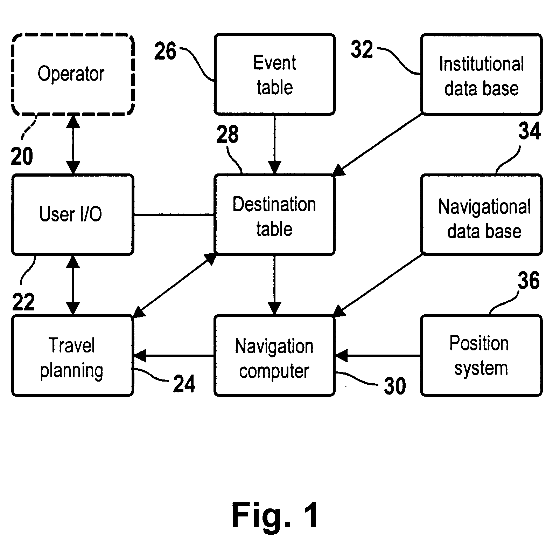

Figure 1 shows an overall diagram of a comprehensive navigation system, that by way of example has nine subsystems, as follows. Block 20 symbolizes a user person who wants to be guided by the system. The user interfaces bidirectionally to the system's I/O that may have various hardware and software facilities such as keyboard, mouse, speech, other audio, and display. Block 32 represents an institutional data base that may store various entries, such as representing hotels, restaurants or other facilities, together with associated data such as location, business hours, and actual services present at those facilities. Block 34 represents a navigational data base that may comprise a road network, together with physical distances or travel time distances between representative points, road classifications, and others. Block 36 represents a position system that detects an actual position of the vehicle, such as through using a well known GPS system. Block 26 represents an event table, such as listing a road block or jam situation that has been communicated by a higher level authority such as as a **R**adio **D**ata **S**ystem, and which event may cause a certain destination to be no longer reacheable, or only in a delayed manner, or which may necessitate the vehicle to take a detour.

Block 28 represents a destination table that contains the destinations and associated timing indications, such as entered by the user through block 22, and subject to information from the travel planning in block 24, the institutional data base in Block 32, and the event table in block 26. Block 30 represents a navigational computer that is fed with the destination table from block 28, with the navigational data base from block 34, and with the position from block 36; from these informations it can figure out a route to be taken, which route contains various interval points and furthermore, timing indications associated to the various interval points. Block 24 represents the travel planning that is fed by the information from the navigational computer 30, and which block 24 furthermore bidirectionally interfaces to the destination table in Block 28, and to the User I/O in Block 22. The travel planning will update the destination table if it fails to find a correct solution for attaining all interval points, and it will signal the user what route is to be taken, as well as will signal the above failure to allow the user to modify the set of interval points and/or associated timing indications. Now, although the system depicted in Figure 1 is fairly comprehensive, a person skilled in the art will recognize that often not all diagram blocks will be necessary in the embodiment of the present invention.

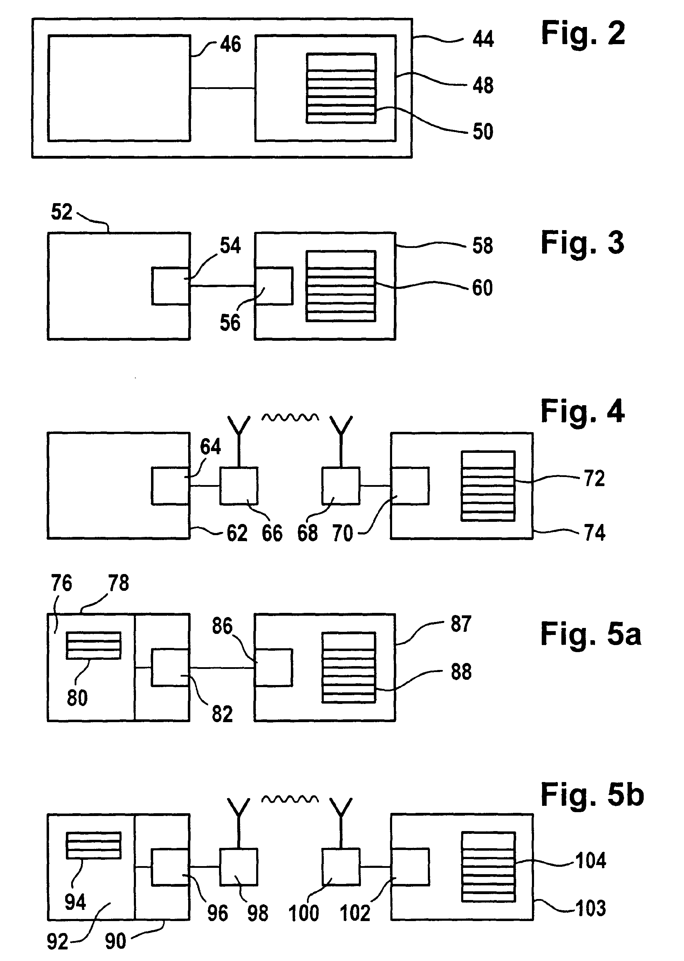

Figure 2 shows an integrated combination 44 of a navigation system 46 and a log book device 48. The latter comprises a log data base 50 with listed entries that record data such as recited hereabove. Also, the log book can specify certain occurrences or facts that should specifically be used or monitored during the trip or the planning thereof. According to a predetermined schedule, such items as detected or measured by the navigation system may be communicated self-reliantly along the connection shown to the log book device for storage therein, for including in a relevant logged item or record, as the case may be. In certain situations, the navigation system system may request the log book device to provide specific information for navigational usage.

Figure 3 shows the same combination 52, 58, 60 interconnected through a wired interface by means of communication modules 54, 56, but not integrated. This configuration allows to unplug the log book device such as for hand-carrying by a user person, that now need not always be the same, inasmuch as the vehicle and its navigation system may be shared by various persons.

Figure 4 shows the same combination 62, 74, 72 interconnected by wireless, through transmitter/receiver modules 66, 68. The communication may be effected by Infrared IRDA, by the so-called Bluetooth organization, or by another close-range link. This allows to undertake the communication under line-of-sight conditions, or in another more or less close geometry. Alternatively, the communication may be effected in the form of further ranging broadcast such as used in the GSM organization.

Figures 5a, 5b show two configurations through combining aspects of the earlier combinations. In figure 5a, the overall system 76, 78, 84, 86, 87, 88 is wired, but the residential module 78 contains both the navigation system 76, communication module 82, but also a log book subsystem 80 that represents a part of the overall log book functionality, such the log for only a limited time interval, such the past week, or for the actual driver, transported goods category, etcetera. The embodiment of Figure 5b has similar subsystems 90, 92, 94, 96, 102, 103, 104, combined with the wireless feature of Figure 4, through transmitter/receiver modules 98, 100.

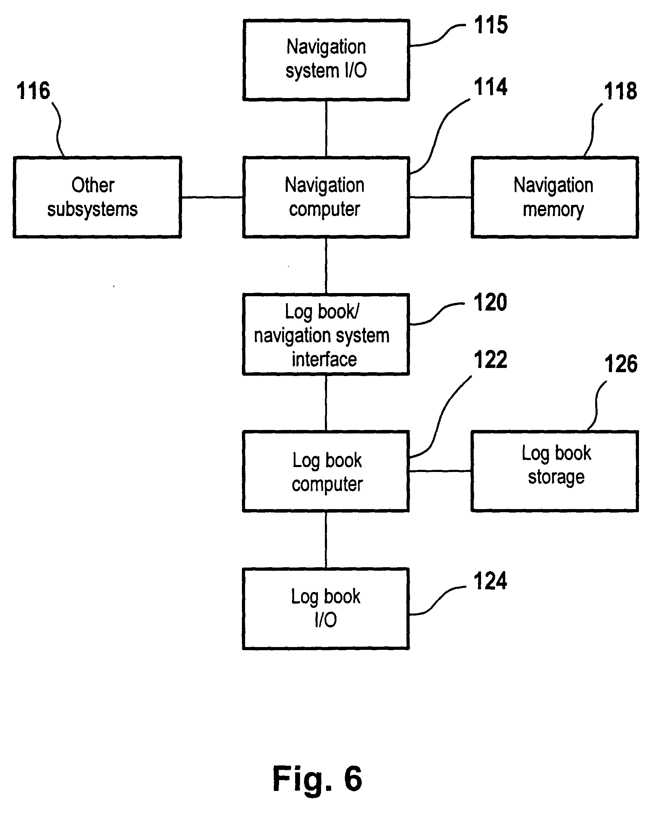

Figure 6 shows a block diagram of an interacting combination of navigation system and log book, broken up into functional versus communication subsystems. The central navigation system comprises a navigational computer 114, a navigation memory 118, navigation system I/O, in particular the user interface items, and other subsystems 116. The computer, as in figure 1, is arranged for route planning, assessing of routes actually taken, checking for problems associated with occurring delays and other problems such as a fuel low. The memory stores the route planned to be taken, the route already accomplished, and various other items, such as the instant when a legally prescribed rest interval must be taken between the driving periods.

Block 120 represents the log book/navigation system interface, that may be activated by either of the two communicating devices, such as based on an interrupt system, or according to periodic polling, by either of the two parties. Block 122 is the logbook computer that keeps up past schedules, accounts, bills incurred, pricings, costs, and various other items as appropriate. The log book device has a user I/O subsystem 124 and a log book memory 126.

## Claims

1. A navigation system provided with various interlinked facilities, including a user I/O facility, a route planning facility and a position determining facility, **characterized in that** the navigation system is arranged to physically interface to a data communication facility pertaining to a trip log book device.

2. A navigation system as claimed in claim 1, **characterized in that** said navigation system is arranged for signalling actual route data to said log book device for consideration in a preexisting logging or financial context.

3. A navigation system as claimed in claim 1, **characterized in that** said log book device is arranged for signalling actual logging or financially oriented data to said navigation system for consideration in a preexistent or future route scheme context.

4. A navigation system with various interlinked facilities, including a user I/O facility, a route planning facility and a position determination facility as claimed in claim 1, **characterized in that** it is physically interfaced to a data communication facility pertaining to a log book device.

5. A navigation system as claimed in claim 4, **characterized in that** said log book device is integrated into the navigation device.

6. A navigation system as claimed in claim 4, **characterized in that** said log book device is connected to the navigation device through fixed interconnection means (54, 56).

7. A navigation system as claimed in claim 4, **characterized in that** said log book device is connected to the navigation device through wireless interconnection means (66, 68).

8. A navigation system as claimed in claim 4, **characterized in that** the log book device functionality is split into a first part that is integrated into the navigation system, and into a second part that is connected to the navigation system through a linking that is external relative to said Navigation system.

9. A method for operating a vehicle navigation system provided with various interlinked facilities, including a user I/O facility, a route planning facility and a position determining facility, **characterized by** physically interfacing the navigation system to a data communication facility pertaining to a log book device.
